# EUROPEAN PATENT APPLICATION

(11) **EP 4 230 753 A1**
(43) Date of publication of application: **23.08.2023**
(21) Application number: 21882366.4
(22) Date of filing: 13.04.2021
(51) Int. Cl.: C22B 7/00, C22B 7/04, C22B 26/12, C22B 3/06, C22B 3/44

(54) **METHOD FOR RECOVERING LITHIUM AND METHOD FOR PRODUCING LITHIUM CARBONATE**

(30) Priority: 19.10.2020 JP 2020175511
(71) Applicant: Kanto Denka Kogyo Co., Ltd., Tokyo 100-0005 (JP); SUMITOMO METAL MINING CO., LTD., Tokyo 105-8716 (JP)
(72) Inventor: ABE, Takuro, Kurashiki-shi, Okayama 712-8533 (JP); HOSODA, Naoki, Kurashiki-shi, Okayama 712-8533 (JP); KATAYAMA, Shinsuke, Kurashiki-shi, Okayama 712-8533 (JP); ASANO, Satoshi, Niihama-shi, Ehime 792-0002 (JP); NAGAKURA, Toshihiko, Niihama-shi, Ehime 792-0002 (JP)
(74) Representative: Plougmann Vingtoft a/s
(86) International application number: PCT/JP2021/015245
(87) International publication number: WO 2022/085222

(57) **Abstract**

A method for recovering lithium from slag containing at least aluminum and lithium, the slag being provided by melting a lithium-ion secondary battery to be disposed of to obtain molten metal containing valuable metal and molten slag containing at least aluminum and lithium and separating the slag containing at least aluminum and lithium from the molten metal containing valuable metal. The condition of the melting of the lithium-ion secondary battery is adjusted such that the slag has an aluminum to lithium mass ratio, Al/Lo, of 6 or less. The method includes: contacting the slag with an aqueous liquid to obtain a leachate containing lithium leached from the slag; and contacting the leachate with a basic substance to cause unwanted metal contained in the leachate to precipitate in the form of a slightly soluble substance, followed by solid-liquid separation to obtain a purified solution having lithium dissolved therein.

## Description

### Technical Field

This invention relates to a method for recovering lithium and a method for producing lithium carbonate.

### Background Art

Lithium-ion secondary batteries are used in various types of equipment, including relatively small devices, such as smartphones, notebook computers, electric tools, and wireless LAN repeaters, and large equipment, such as hybrid vehicles, electric vehicles, household storage batteries, solar power storage facilities, and emergency storage batteries.

A lithium-ion secondary battery (hereinafter abbreviated as LIB") includes, as a package, a metal can made of aluminum, iron, stainless steel, and so on or a laminate pouch film composed, e.g., of polypropylene and aluminum foil. The package contains a negative electrode including a copper foil as a current collector and a negative electrode active material, such as graphite, attached to the current collector and a positive electrode including an aluminum foil as a current collector and a positive electrode active material, such as lithium nickelate or lithium cobaltate, attached to the current collector, together with a porous film made, e.g., of polypropylene as a separator. Furthermore, an organic solvent containing a lithium salt electrolyte is sealed therein as an electrolytic solution.

LIBs as used in equipment deteriorate with charge/discharge repetition or overcharge and are disposed of as waste. Even those devices whose LIB has not been shown to have deteriorated may be disposed of after replacement or upgrading. In addition, in the manufacturing processes of LIBs, they are sometimes disposed of as rejects before being used due to in-process defects or other reasons.

The waste LIBs contain valuable components, such as nickel, cobalt, copper, and lithium, and the recovery and reuse of the valuable components is being considered for effective use of resources and as a measure against environmental pollution.

In general, when efficiently recovering valuable components from materials and parts made of metals and devices composed of multiple structures, pyrometallurgy is used, in which they are fed into a furnace, etc. and roasted or melted at high temperatures.

Recovery of lithium from LIBs has been mostly limited to recovery from roasted and crushed LIBs as described in patent literatures 1 and 2 listed below. In patent literature 1, an attempt is made to recover lithium from roasted LIB scrap by leaching or neutralization fractionation. In patent literature 2, lithium is recovered from roasted LIB scrap through a number of processes, such as multi-stage extraction with solvents and extractants, and separation and removal for each impurity.

On the other hand, patent literature 3 describes the recovery of lithium from slag from a dry melting process of waste LIBs. In the dry melting process, waste LIBs are heated together with a flux at high temperatures, e.g., 1100°C or higher, and separated into metal including valuable components, such as cobalt, nickel, and copper, and slag to be disposed of.

### Citation List

### Patent Literature

Patent literature 1: JP 2019-160429A
Patent literature 2: JP 2019-173106A
Patent literature 3: JP 2002-29613A

### Summary of Invention

The method of patent literature 1 involves use of many chemicals for melting nickel, cobalt, and copper in the roasted LIB scrap. Furthermore, the valuable components, i.e., nickel, cobalt, and copper are incorporated into the neutralization residue, and this increases the loss and the labor of re-melting, separating, and recovering.

The complicated processes involved in the method of patent literature 2 not only reduce the efficiency of lithium recovery but produce a large quantity of waste, such as spent chemicals and solvents. This creates the problem of high cost and effort for reducing environmental impact. In addition, the chemicals used cause reduction in quality of the resulting lithium compound. Therefore, this method cannot be considered efficient.

The use of slag from the dry melting process as in the method of patent literature 3 is advantageous in that it allows effective utilization of the slag that is separated from nickel, cobalt, and copper and is of little economical value. However, the inventors have found that merely contacting the slag with an aqueous liquid in the leaching process as in the method of patent literature 3 does not achieve a sufficient lithium recovery.

Accordingly, an object of the invention is to eliminate the problems unsolved by the conventional technologies described above.

The inventors have intensively studied the technology for increasing the efficiency in recovering lithium from slag from a melting process of LIBs to be disposed of. As a result, they have found that the lithium recovery increases drastically when the mass ratio of aluminum to lithium in the slag is at or below a specific value.

Based on the above findings, the invention provides a method for recovering lithium from slag containing at least aluminum and lithium, the slag being provided by melting a lithium-ion secondary battery to be disposed of to obtain molten metal containing valuable metal and molten slag containing at least aluminum and lithium and separating the slag containing at least aluminum and lithium from the molten metal containing the valuable metal. The condition of the melting of the lithium-ion secondary battery is adjusted such that the slag has an aluminum to lithium mass ratio, Al/Li, of 6 or less. The method includes: contacting the slag with an aqueous liquid to obtain a leachate containing lithium leached from the slag (lithium-leaching step); and contacting the leachate with a basic substance to cause unwanted metal contained in the leachate to precipitate in the form of a slightly soluble substance, followed by solid-liquid separation to obtain a purified solution having lithium dissolved therein (purification step).

The invention also provides a method for producing lithium carbonate from slag containing at least aluminum and lithium, the slag being provided by melting a lithium-ion secondary battery to be disposed of to obtain molten metal containing valuable metal and molten slag containing at least aluminum and lithium and separating the slag containing at least aluminum and lithium from the molten metal containing valuable metal. The condition of the melting the lithium-ion secondary battery is adjusted such that the slag has an aluminum to lithium mass ratio, Al/Li, of 6 or less. The method includes: contacting the slag with an aqueous liquid to obtain a leachate containing lithium leached from the slag; contacting the leachate with a basic substance to cause an unwanted metal contained in the leachate to precipitate in the form of a slightly soluble substance, followed by solid-liquid separation to obtain a purified solution having lithium dissolved therein; and contacting the purified solution having lithium dissolved therein with a carbonate or carbon dioxide to precipitate a carbonate of lithium in the solution.

### Description of Embodiments

The lithium recovery method and lithium carbonate production method of the invention will be described on the basis of their preferred embodiments.

In the methods of the invention, slag by-produced in the melting process of LIBs to be disposed of to recover valuable metals is used as a starting material.

The term "LIBs to be disposed of" encompasses both spent LIBs and waste materials generated in the manufacture of LIBs. Examples of the waste materials include rejects of positive electrodes and the like, in-process residues, and in-process debris generated in the LIB manufacturing processes. Among the spent LIBs and waste materials from the LIB manufacturing processes, those containing an electrolytic solution have an explosion risk and are therefore dangerous if handled as such. Accordingly, these must be made harmless by any method. For example, the battery is discharged and then physically punctured with a needle-like object to remove the electrolytic solution, or the waste battery is heated as such to burn the electrolytic solution.

The melting process to produce slag can be carried out as follows. LIBs to be disposed of are melted in high temperatures in a reducing atmosphere. For example, the LIBs are placed in a melting furnace and melted at about 1100° to 1500°C in the presence of at least carbon or carbon monoxide. As a result of such a dry melting process based on reducing roasting, there are produced molten metal containing valuable metals and molten slag containing at least aluminum and lithium. The valuable metals contained in waste LIBs, such as copper, nickel, and cobalt, are distributed in the molten metal. On the other hand, lithium and aluminum contained in the waste LIBs are basically distributed in the molten slag (oxides). The molten metal and the molten slag can be separated from each other by the difference in specific gravity. Metal, which has a higher specific gravity, form a lower layer while slag, which has a lower specific gravity, naturally floats to form an upper layer. The molten product can be thus separated into molten metal and molten slag, which are cooled to yield valuable metal (crude metal) mainly including nickel, cobalt, and copper and slag containing lithium, aluminum, and impurity elements, such as manganese and phosphorus, respectively. In the melting process, it is preferred to adjust the degree of oxidation or reduction. The adjustment of the degree of oxidation or reduction can be achieved by adjusting the amount of carbon or using an oxygen-containing gas, such as air, pure oxygen, or oxygen-rich gas.

Throughout the description of the invention, slag in a molten state is basically referred to as molten slag, and when simply "slag" is used without the word "molten", it refers to slag in solid form after separation from metal unless otherwise specified.

The slag has an aluminum to lithium mass ratio, Al/Li, of 6 or less, preferably 5.0 or less, more preferably 4.0 or less, even more preferably 3.5 or less. The Al/Li is preferably at least 0.5 and more preferably 1.0 or higher in terms of availability of slag and separation of aluminum. The Al/Li of the slag can be determined by ICP atomic emission spectrometry (ICP-AES) or X-ray fluorescence analysis. More specifically, the method of analysis described in Examples given later can be used.

In order to adjust the Al/Li of the slag within the above range, the following methods (1) to (3) for controlling the amount of aluminum present in the melting process can be adopted. To use method (1) is preferred, and to use methods (1) and (2) is more preferred. To use all methods (1) to (3) is even more preferred.

Method (1) is to separate at least part of aluminum from LIBs before the melting process by selective melting and removal of aluminum or by crushing and separation of aluminum to selectively remove aluminum. Specifically, at least part of aluminum is separated from LIB scrap to be subjected to the melting process by selective melting and removal of aluminum or by crushing/separation to selectively remove aluminum.

The LIB packages often have a metal case, e.g., an aluminum film, an aluminum can, an iron can, or a stainless steel can. In the case where aluminum is to be preferentially removed from LIBs having an aluminum film or can, in particular, the selective melting and removal of the aluminum film or cans are preferably performed as a pretreatment before the melting process for producing slag. The pretreatment may be performed either simultaneously with or after the treatment for making the LIBs harmless described above. When aluminum foil is to be removed from LIBs containing aluminum foil coated with a positive electrode active material or from waste materials generated in the LIB manufacturing processes (e.g., rejects of positive electrodes, etc., in-process residues, and in-process debris generated in the LIB manufacturing processes), the crushing/separation method is preferably used.

LIBs having aluminum films or aluminum cans not having been subjected to aluminum removal by melting can also be subjected to selective aluminum removal by crushing/separation. Melting and removal of aluminum and crushing/separation may be used in combination.

Selective melting and removal of aluminum can be carried out prior to the melting process by, for example, heating LIBs to be disposed of at a predetermined temperature exceeding the melting point of aluminum. The heating temperature for selective melting for removal of aluminum is preferably 660°C to lower than 1100°C, more preferably 700°C to 800°C. The atmosphere of selective melting for removal of aluminum is not particularly limited, but a low-oxygen atmosphere is preferred in terms of prevention of aluminum oxidation, and high-temperature exhaust gas from an incinerator may be utilized. The heating at the above-described temperature before the hereinabove-described roasting at or above 1100°C allows for selective melting of aluminum. The selective melting for removal of aluminum may be conducted using the same heat treatment furnace as that used for the melting process described hereinabove or using another furnace. The thus molten aluminum can be removed from the LIBs to be disposed of in any manner, and for example, the molten aluminum may be cooled, followed by selectively removing the resulting solid aluminum manually from the LIBs to be disposed of.

The crushing, on the other hand, is for breaking the LIBs from which aluminum films or cans have been removed by melting, iron cans of LIBs, or aluminum films (current collectors for positive electrodes) or aluminum cans that have not been removed beforehand by melting, and for selectively separating aluminum cans that have not been removed for reasons, such as not having undergone the melting treatment, from LIBs or in-process waste materials generated in the LIB manufacturing processes (e.g., rejects of positive electrodes and the like, in-process residues, and in-process debris). The crushing is also for selectively separating aluminum foil from LIBs containing aluminum foil coated with a positive electrode active material and in-process waste materials generated during the LIB manufacture.

The crushing can be accomplished using an impact mill capable of applying an impact force while cutting LIB scrap, including a sample mill, a hammer mill, a cutter mill, a pin mill, a wing mill, a tornado mill, and a hammer crusher. The crushed LIB scrap is sieved using a screen of predetermine opening size. Aluminum foil, aluminum cans, and copper foil are trapped above the screen as oversize, while crushed grains of LIB scrap from which aluminum has been removed to a certain level pass through the screen as undersize. For efficient aluminum removal, it is preferable to use a screen with an opening size of 1 to 10 mm, more preferably 2 to 5 mm. Aluminum films and aluminum cans may selectively be removed from the oversize using a pneumatic separator taking advantage of the difference in specific gravity or an eddy current separator.

Method (2) is to carry out the melting process using a furnace of which the portion coming into contact with molten slag is made of an aluminum-free material. For example, the melting process for slag formation is performed using a melting furnace made of an aluminum-free material. While alumina is a refractory material commonly used to make melting furnaces, melting is preferably conducted using a melting furnace or material that does not contain alumina. Aluminum-free materials for the melting furnace may be used to construct the furnace bottom and wall with which the melt contacts. Alumina may be used only in the portion with which the melt does not contact, such as a gas zone or a furnace roof. Examples of the materials that can be used to construct the furnace bottom and wall include magnesia, magnesia-carbon, and magnesia-chromium.

In method (3), when a flux is added to accelerate slag formation in the melting process, the flux to be added is selected from those having an aluminum content that will not cause the Al/Li of the resulting slag to exceed 6, based on the aluminum and lithium content in the material being melted.

In the melting process, a flux can be added to the melt to accelerate slag formation. The flux to be used is preferably selected from aluminum-free ones, such as calcium oxide, magnesium oxide, and silicon oxide. The amount of the flux to be added is not particularly limited and can be decided appropriately within a range that does not cause the lithium content of the resulting slag to be too low, in view of lithium recovery, with considerations given to the slag temperature, impurities in the crude metal, and so forth. An aluminum-containing flux may also used. The aluminum content of the aluminum-containing flux and the amount of the aluminum-containing flux to be added should be adjusted so that the resulting slag may have an Al/Li of 6 or lower, preferably 0.5 to 5.0, more preferably 1.0 to 4.0.

As stated above, the melt from the melting process is separated into crude metal and slag. There are thus obtained crude metal containing copper, nickel, and cobalt as main components and slag containing lithium and impurity elements.

The slag usually includes aluminum, magnesium, silicon, lithium, fluorine, manganese, and so on in the form of oxide. For efficient recovery of lithium from the slag, the lithium content of the slag is preferably 1.0 to 25.0 mass%, more preferably 5.0 to 15.0 mass%. The lithium content of the slag can be determined by the method described in Examples hereinafter given.

### Lithium-leaching step:

Then, the separated slag is brought into contact with an aqueous liquid to obtain a leachate containing lithium leached from the slag (leaching step). The aqueous liquid used in the leaching may be water or an aqueous acid solution. Examples of the acid include mineral acids, such as sulfuric acid, nitric acid, hydrochloric acid, phosphoric acid, and carbonic acid; and organic acids, such as citric acid, glycine, oxalic acid, and acetic acid. Sulfuric acid or hydrochloric acid is preferred in view of high lithium-leaching efficiency, low cost, and less work required for impurity separation.

The leachate preferably has a pH of 7 or lower, more preferably 5 or lower. A pH of 5 or lower is advantageous for increasing lithium-leaching efficiency. The pH of the leachate is the one measured of the mixture of the aqueous liquid and the slag at the temperature of the mixture.

The amount of the aqueous liquid to be mixed with the slag is preferably 100 to 2000 parts, more preferably 200 to 1500 parts, by mass per 100 parts by mass of the slag in terms of reduced cost and increase in the lithium concentration.

The temperature of the leachate (the liquid temperature during leaching) is not particularly limited but is usually from room temperature up to 300°C in terms of lithium-leaching efficiency and preferably 30° to 150°C, more preferably 60° to 100°C, even more preferably 70° to 90°C, in terms of energy cost. The leaching may be performed under atmospheric pressure or, in view of lithium-leaching efficiency, under pressure, for example, an absolute pressure of 8.0 MPa or less, more preferably 2.0 to 4.5 MPa.

The slag to be subjected to the leaching step is preferably in the form of grains having an average grain size of 5 mm or smaller, more preferably 3 mm or smaller, even more preferably 1 mm or smaller, in terms of lithium-leaching efficiency. The finer the slag grains, the more efficient the recovery of lithium. However, if the slag is in the form of finer powder, it is difficult to handle, and in addition, to finely reduce the slag grain size incurs cost. In view of handling and economy, the average grain size of the slag is 0.5 mm or greater. After the slag is separated from the metal through the dry process, the slag grain size can be adjusted by crushing or grinding the collected slag in a usual manner and then sieving. The average grain size can be analyzed in a known method and refers to the 50th percentile particle diameter in a volume-weighted particle size distribution as measured by, for example, the laser diffraction/scattering method. In performing analysis by the laser diffraction/scattering method, sodium hexametaphosphate can be used as a dispersant for the slag.

### Purification step:

The leachate is brought into contact with a basic substance to cause unwanted metal contained in the leachate to precipitate in the form of a slightly soluble substance. The manner of adding the basic substance is not particularly limited. The basic substance may be added either to the leachate or a liquid phase resulting from solid-liquid separation of the leachate. The pH of the leachate increases by the contact with the basic substance, and thus, unwanted metals other than lithium in the leachate form precipitate. Examples of the unwanted metal include, but are not limited to, calcium, magnesium, manganese, silicon, and aluminum.

The contact between the leachate and the basic substance is preferably carried out in such a manner that the mixture of the leachate and the basic substance has a pH of 5 to 14, more preferably 10 to 12, even more preferably 10 to 11. Adjusting the pH to 10 or higher is particularly preferred in view of effective precipitation of unwanted metals such as manganese and magnesium. Adjusting the pH to 12 or lower is preferred in view of preventing re-dissolution of aluminum, which is amphoteric. According to the invention, since the Al/Li of the slag is small, formation of a composite hydroxide of lithium and aluminum is less likely to occur in the leachate even when the pH of the aqueous liquid is in the above range, and accordingly, the lithium recovery efficiency is increased effectively. The pH of the mixture of the leachate and the basic substance is the pH as measured at the mixture's temperature at the start of the solid-liquid separation.

The contact between the leachate and the basic substance is preferably performed under atmospheric pressure in terms of convenience. The contact may be performed either at room temperature or under heating. In heating, the temperature of the mixture of the leachate and the basic substance is preferably a temperature from room temperature to 100°C, more preferably 60° to 90°C, in view of lithium recovery efficiency and the effect of lowering the viscosity of the mixture.

Examples of useful basic substances include hydroxides, such as alkali metal or alkaline earth metal hydroxides, e.g., a sodium hydroxide solution, magnesium hydroxide, calcium hydroxide, and lithium hydroxide; carbonates, such as alkali metal or alkaline earth metal carbonates, e.g., sodium carbonate, potassium carbonate, calcium carbonate, and lithium carbonate; oxides, such as alkali metal or alkaline earth metal oxides, e.g., sodium oxide, potassium oxide, calcium oxide, and lithium oxide; and amines, such as methylamine, dimethylamine, and trimethylamine.

The solid-liquid separation of the mixture of the leachate and the basic substance can be conducted in a known manner with no particular limitation. As a result of the solid-liquid separation, the mixture is separated into a slightly soluble substance including unwanted metals and a purified solution containing lithium with reduced unwanted metal.

### Carbonate formation step:

In the invention, the purified solution containing lithium obtained by the above purification step is contacted with a carbonate or carbon dioxide to form a carbonate of lithium in the purified solution. As a carbonate, an alkali metal carbonate is preferred in terms of reactivity. Sodium carbonate or potassium carbonate is particularly preferred. The purified solution may be concentrated before the contact with a carbonate or carbon dioxide. In that case, the solution is preferably concentrated 1.1 to 30-fold, more preferably 1.5 to 20-fold.

The temperature of the purified solution is preferably maintained at 60° to 100°C in the carbonate formation in terms of reaction efficiency and impurity removal.

### Examples

The invention will now be illustrated by way of Examples, but it should be understood that the invention is not construed as being limited thereto. All of the fluxes used in Examples and Comparative Examples were of the type that accelerates slag formation. Unless otherwise noted, all the percentages are by mass.

### Chemical composition analysis:

The amount of each metal element in the slag was determined by adding to the slag 10 times the mass of 60% nitric acid, 10 times the mass of 35% hydrochloric acid, and 30 times the mass of ultrapure water, mixing for 2 hours at 110°C (dissolution treatment), and analyzing the resulting sample solution by ICP-AES. When insoluble matter remained after the dissolution treatment, the amounts of lithium and aluminum in the slag were calculated based on the weight of the slag under analysis having subtracted therefrom the weight of the insoluble matter separately measured as described below. The thus determined amount of lithium are shown in Tables 1 and 2. The Al/Li as calculated from the aluminum and the lithium concentration of the solution obtained by the dissolution treatment is also shown in Tables 1 and 2. The insoluble matter was separated from the liquid phase using a membrane filter, dried in a glass petri dish in an electric dryer at 50°C for 2 hours, and weighed.

A leachate and a neutralization liquid were also analyzed for chemical composition by ICP-AES. The amount of lithium in lithium carbonate was determined by analyzing a solution of the lithium carbonate by ICP-AES as well.

### Average grain size:

The average grain size of slag was measured by the laser diffraction/scattering method using an analyzer available from Horiba, Ltd.

### Example 1

Slag with an Al content of 13.0% and an Li content of 8.8% was used as a starting material. This slag was obtained as follows.

Method (1) was followed in carrying out the melting process. Scrap of LIBs having aluminum cans having been made harmless by the method described hereinabove was heated at 750°C in a low-oxygen atmosphere with an oxygen concentration of 10 vol% or less and the rest of nitrogen and carbon dioxide to selectively melt aluminum. The aluminum melt was removed manually. The scrap after removal of aluminum was crushed in a hammer mill and sieved through a screen of 2 mm opening. The undersize from the screen was melted together with an aluminum-free flux (e.g., a calcium compound) by heating in a reducing atmosphere at 1400°C in the presence of carbon. All the furnace material making up the furnace wall was magnesia. There was obtained slag having an Al/Li of 1.5. The slag was crushed to an average grain size of 0.5 to 1 mm.

To 10 g of the crushed slag was added 77 g of sulfuric acid having been diluted with water to 40%, and the mixture was heated to 70°C under atmospheric pressure to adjust to a pH of less than 1. To the resulting leachate containing the slag was added 64 g of calcium hydroxide having been diluted with water to 25% as a basic substance at 70°C to adjust to a pH of 11 at that temperature. The formed precipitate was collected by filtration (solid-liquid separation), and the solid phase was washed by passing 100 g of water therethrough. The filtrate was combined with the washing water to provide a purified solution. The lithium content of the purified solution was determined by the method described above. The lithium recovery from the slag was as shown in Table 1.

### Example 2

Slag with an Al content of 13.9% and an Li content of 5.2% was used as a starting material. This slag was obtained in the same manner as in Example 1, except that, after the sieving, the oversize from the screen (2 mm opening) was subjected to a pneumatic gravity separator to remove residual aluminum, and that the undersize from the screen was subjected to the melting process together with the oversize from which aluminum has been removed and an aluminum-free flux (e.g., a calcium compound). The slag thus obtained had an Al/Li of 2.7. The slag was crushed to an average grain size of 0.5 to 1 mm.

To 10 g of the slag was added 41 g of sulfuric acid having been diluted with water to 40%, and the mixture was heated to 70°C under atmospheric pressure to adjust to a pH of 2.3. To the resulting leachate containing the slag was added 90 g of calcium hydroxide having been diluted with water to 5% as a basic substance at 70°C to adjust to a pH of 11 at that temperature. The formed precipitate was collected by filtration (solid-liquid separation), and the solid phase was washed by passing 100 g of water therethrough. The filtrate was combined with the washing water to provide a purified solution. The lithium content of the purified solution was determined by the method described above. The lithium recovery from the slag was as shown in Table 1.

### Example 3

Slag with an Al content of 19.1% and an Li content of 5.5% was used as a starting material. This slag was obtained in the same manner as in Example 1, except that the crushed scrap from a hammer mill was melted together with an aluminum-free flux (e.g., a calcium compound). The resulting slag had an Al/Li of 3.5. The slag was crushed to an average grain size of 0.5 to 1 mm.

To 10 g of the slag was added 58 g of sulfuric acid having been diluted with water to 40%, and the mixture was heated to 70°C under atmospheric pressure to adjust to a pH of 1.1. To the resulting leachate containing the slag was added 83 g of calcium hydroxide having been diluted with water to 15% as a basic substance at 70°C to adjust to a pH of 11 at that temperature. The formed precipitate was collected by filtration (solid-liquid separation), and the solid phase was washed by passing 170 g of water therethrough. The filtrate was combined with the washing water to provide a purified solution. The lithium content of the purified solution was determined by the method described above. The lithium recovery from the slag was as shown in Table 1.

### Example 4

Slag with an Al content of 27.9% and an Li content of 4.9% was used as a starting material. This slag was obtained in the same manner as in Example 1, except for using alumina as a flux in the melting process. The resulting slag had an Al/Li of 5.7. The slag was crushed to an average grain size of 0.5 to 1 mm.

To 10 g of the slag was added 140 g of sulfuric acid having been diluted with water to 30%, and the mixture was heated to 70°C under atmospheric pressure to adjust to a pH of less than 1 at that temperature. To the resulting leachate containing the slag was added 209 g of calcium hydroxide having been diluted with water to 15% as a basic substance at 70°C to adjust to a pH of 11 at that temperature. The formed precipitate was collected by filtration (solid-liquid separation), and the solid phase was washed by passing 100 g of water therethrough. The filtrate was combined with the washing water to provide a purified solution. The lithium content of the purified solution was determined by the method described above. The lithium recovery from the slag was as shown in Table 1.

### Comparative Example 1

Slag with an Al content of 29.4% and an Li content of 3.9% was used as a starting material. This slag was obtained in the same manner as in Example 1, except that the LIB scrap was directly crushed in a hammer mill without the previous removal of aluminum by melting according to method (1), and that the crushed scrap was subjected to the melting process. The slag was crushed to an average grain size of 0.5 to 1 mm.

To 10 g of the slag was added 75 g of sulfuric acid having been diluted with water to 40%, and the mixture was heated to 70°C under atmospheric pressure to adjust to a pH of less than 1 at that temperature. To the resulting leachate containing the slag was added 110 g of calcium hydroxide having been diluted with water to 15% as a basic substance at 70°C to adjust to a pH of 11 at that temperature. The formed precipitate was collected by filtration (solid-liquid separation), and the solid phase was washed by passing 120 g of water therethrough. The filtrate was combined with the washing water to provide a purified solution. The lithium content of the purified solution was determined by the method described above. The lithium recovery from the slag was as shown in Table 1.

### Comparative Example 2

Slag with an Al content of 28.6% and an Li content of 3.6% was used as a starting material. This slag was obtained in the same manner as in Example 1, except that the LIB scrap was directly crushed in a hammer mill without the previous removal of aluminum by melting according to method (1) and melted, and that a furnace made of alumina was used. The slag was crushed to an average grain size of 0.5 to 1 mm.

To 10 g of the slag was added 75 g of sulfuric acid having been diluted with water to 40%, and the mixture was heated to 70°C under atmospheric pressure to adjust to a pH of less than 1 at that temperature. To the resulting leachate containing the slag was added 111g of calcium hydroxide having been diluted with water to 15% as a basic substance at 70°C to adjust to a pH of 11 at that temperature. The formed precipitate was collected by filtration (solid-liquid separation), and the solid phase was washed by passing 120 g of water therethrough. Through the above steps, a purified solution was obtained. The lithium content of the resulting purified solution was determined by the method described above. The lithium recovery from the slag was as shown in Table 1.

**Table 1**

| | Li in Slag (mg) | Al/Li | Li in Purified Solution (mg) | Li Recovery (%) |
|---|---|---|---|---|
| Example 1 | 797 | 1.5 | 777 | 97 |
| Example 2 | 518 | 2.7 | 452 | 87 |
| Example 3 | 545 | 3.5 | 515 | 94 |
| Example 4 | 490 | 5.7 | 310 | 63 |
| Comp. Example 1 | 349 | 7.5 | 92 | 26 |
| Comp. Example 2 | 299 | 7.9 | 96 | 32 |

It is seen from Table 1 that the lithium recovery is greatly increased by adjusting the Al to Li mass ratio to 6 or lower.

### Examples 5 to 8

Slag with an Al content of 19.1% and an Li content of 5.5% was used as a starting material. This slag was obtained in the same manner as in Example 1, except that the crushed scrap from a hammer mill was melted together with an aluminum-free flux (e.g., a calcium compound). There was obtained slag with an Al/Li of 3.5. The slag was crushed to the average grain size shown in Table 2.

To 15 g of the slag was added 113 g of sulfuric acid having been diluted with water to 40%, and the mixture was heated to 70°C under atmospheric pressure to adjust to a pH of less than 1 at that temperature. The lithium content of the resulting leachate and the lithium recovery were as shown in Table 2.

**Table 2**

| | Grain Size (mm) | Li in Slag (mg) | Li in Leachate (mg) | Li Recovery (%) |
|---|---|---|---|---|
| Example 5 | ≤ 1 | 818 | 800 | 98 |
| Example 6 | 1-2 | 818 | 698 | 85 |
| Example 7 | 2-3.4 | 818 | 528 | 65 |
| Example 8 | 3.4-5 | 818 | 482 | 59 |

As shown in Table 2, the lithium recovery was as good as at least 59% when the slag grain size was 5 mm or smaller.

### Example 9

Slag with an Al content of 13.9%, an Li content of 5.2%, a magnesium content of 3.7%, and a manganese content of 2.9% was used as a starting material.

The slag was obtained in the same manner as in Example 1, except for the following: the oversize from the screen (2 mm opening) was subjected to a pneumatic gravity separator to remove residual aluminum; and the undersize from the screen and the oversize from which residual aluminum has been removed were subjected to the melting process together with and an aluminum-free flux (e.g., a calcium compound). There was thus obtained slag having an Al/Li of 2.7. The slag was crushed to an average grain size of 0.5 to 1 mm.

To 18 g of the slag was added 68 g of sulfuric acid having been diluted with water to 40%, and the mixture was heated to 70°C under atmospheric pressure to adjust to a pH of 1.8. To the resulting leachate containing the slag was added calcium hydroxide having been diluted with water to 5% as a basic substance at 70°C to adjust to the pH shown in Table 3 at that temperature. The formed precipitate was collected by filtration (solid-liquid separation), and the solid phase was washed by passing 180 g of water therethrough. Through the above steps, a purified solution was obtained. The lithium, magnesium, and manganese contents of the resulting purified solution as determined by the method described above are shown in Table 3.

### Examples 10 and 11

A purified solution was obtained in the same manner as in Example 9, except that the pH value of the leachate at 70°C as adjusted by addition of a basic substance was changed as shown in Table 3. The lithium, magnesium, and manganese contents of the resulting purified solution as determined by the method described above are shown in Table 3.

**Table 3**

| | pH after Neutralization | Metal Content of Purified Solution (mg) | | |
|---|---|---|---|---|
| | | Mg | Mn | Li |
| Example 9 | 11.5 | N.D. | N.D. | 750 |
| Example 10 | 5.5 | 2663 | 1482 | 878 |
| Example 11 | 6.4 | 1662 | 658 | 814 |

| | | | | |
|---|---|---|---|---|
| N.D. = not detected | | | | |

### Example 12

The purified solution obtained in Example 9 was 10-fold concentrated under reduced pressure. To the concentrate was added 2.5 g of sulfuric acid having been diluted with water to 10% to adjust the pH at 70°C to 7. Sodium carbonate was added thereto to cause the resulting mixture to react at 80°C. The precipitated lithium carbonate was collected by filtration under heating, and dried at 100°C. The lithium content of the lithium carbonate was determined, and the lithium recovery from the slag was found to be 52% as calculated from the lithium content. The purity of the lithium carbonate was found to be 98% from the results of analysis of impurity metals.

### Industrial Applicability

The invention allows for recovery of lithium, from the slag that is by-produced in melting waste LIBs for recovery of valuable metals, at higher efficiency than conventional techniques. The method of the invention enables effective utilization of the slag, which has been used only for building materials and the like in the past, through a few processes with low environmental burden.

## Claims

1. A method for recovering lithium from slag containing at least aluminum and lithium, the slag being provided by melting a lithium-ion secondary battery to be disposed of to obtain molten metal containing valuable metal and molten slag containing at least aluminum and lithium and separating the slag from the molten metal containing valuable metal, wherein a condition of the melting of the lithium-ion secondary battery is adjusted such that the slag has an aluminum to lithium mass ratio, Al/Li, of 6 or less,
the method comprising:
contacting the slag with an aqueous liquid to obtain a leachate containing lithium leached from the slag, and
contacting the leachate with a basic substance to cause unwanted metal contained in the leachate to precipitate in the form of a slightly soluble substance, followed by solid-liquid separation to obtain a purified solution having lithium dissolved therein.

2. The method for recovering lithium according to claim 1, wherein the amount of aluminum present in the melting of the lithium-ion secondary battery is controlled to adjust the aluminum to lithium mass ratio of the slag to 6 or less.

3. The method for recovering lithium according to claim 2, wherein the amount of aluminum present in the melting is controlled by any one of
method (1) comprising separating at least part of aluminum from the lithium-ion secondary battery before the melting by selective melting and removal of aluminum or by crushing and separation of aluminum to selectively remove aluminum,
method (2) comprising carrying out the melting using a furnace of which a portion coming into contact with molten slag is made of an aluminum-free material, and
method (3) comprising, in case of using a flux to accelerate slag formation in the melting, using the flux which has an aluminum content that does not cause the aluminum to lithium mass ratio of the resulting slag to exceed 6.

4. The method for recovering lithium according to any one of claims 1 to 3, wherein the slag to be contacted with the aqueous liquid to obtain the leachate containing lithium leached from the slag is crushed into grains having a grain size of 5 mm or smaller.

5. The method for recovering lithium according to any one of claims 1 to 4, wherein the contacting of the leachate with the basic substance is such that the resulting mixture of the leachate and the basic substance has a pH of 10 to 12.

6. The method for recovering lithium according to any one of claims 1 to 5, further comprising contacting the purified solution having lithium dissolved therein with a carbonate or carbon dioxide to precipitate a carbonate of lithium in the solution.

7. A method for producing lithium carbonate from slag containing at least aluminum and lithium, the slag being provided by melting a lithium-ion secondary battery to be disposed of to obtain molten metal containing valuable metal and molten slag containing at least aluminum and lithium and separating the slag containing at least aluminum and lithium from the molten metal containing valuable metal, wherein a condition of the melting of the lithium-ion secondary battery is adjusted such that the slag has an aluminum to lithium mass ratio, Al/Li, of 6 or less,
the method comprising:
contacting the slag with an aqueous liquid to obtain a leachate containing lithium leached from the slag,
contacting the leachate with a basic substance to cause an unwanted metal contained in the leachate to precipitate in the form of a slightly soluble substance, followed by solid-liquid separation to obtain a purified solution having lithium dissolved therein, and
contacting the purified solution with a carbonate or carbon dioxide to precipitate a carbonate of lithium in the solution.
